# EUROPEAN PATENT APPLICATION

(11) **EP 4 782 143 A1**
(43) Date of publication of application: **29.07.2026**
(21) Application number: 26150798.2
(22) Date of filing: 08.01.2026
(51) Int. Cl.: B23K 26/244

(54) **METHOD FOR MANUFACTURING ELECTRICITY STORAGE DEVICE AND ELECTRICITY STORAGE DEVICE**

(30) Priority: 23.01.2025 JP 2025009860
(71) Applicant: Prime Planet Energy & Solutions, Inc., Chuo-ku, Tokyo 103-0022 (JP)
(72) Inventor: MIKI, Satoshi, Tokyo,, 103-0022 (JP)
(74) Representative: Kuhnen & Wacker Patent- und Rechtsanwaltsbüro PartG mbB

(57) **Abstract**

A method for manufacturing an electricity storage device includes a case body preparing step, a closing plate preparing step, and a welding step. The closing plate prepared in the step of preparing the closing plate includes: a closing portion that covers the opening of the case body, while overlapping an edge of the opening; and an insertion portion inserted into the opening along an inner side of the case body with the closing plate closing the opening. In the step of laser-welding the case body and the closing plate, an area located on the closing portion side relative to a boundary between the edge of the opening and the closing portion is irradiated with laser light, thereby welding the edge of the opening and the closing portion at their boundary.

## Description

### BACKGROUND

The present disclosure relates to a method for manufacturing an electricity storage device and to an electricity storage device.

Japanese Patent Application Publication No. 2018-001245 discloses a method for manufacturing a battery that includes a step (welding step) of laser-welding a plurality of metal plates to form a case for accommodating a battery pack. Among two metal plates to be welded together along their respective edges, one metal plate (first metal plate) has an area to be welded along its edge. On the side opposite to the edge with respect to the area to be welded, the first metal plate is provided with an opening (communication passage) that penetrates this metal plate in its thickness direction along the area to be welded. The other metal plate (second metal plate) is bent along its edge at a right angle such that a part (edge part) along the edge stands upright. The second metal plate is provided with a predetermined raised portion (barrier portion) between the edge of the upright end (including an area to be welded) and the area to be welded. In the welding step, both edge parts of the first and second metal plates are arranged such that the raised portion of the second metal plate is partially inserted into the opening of the first metal plate, and that the respective areas to be welded of the two metal plates face each other with a slight gap therebetween. In this state (overlapping joint state), the areas to be welded of both metal plates are irradiated and scanned with laser light from the first metal plate side. According to Japanese Patent Application Publication No. 2018-001245, in such a welding step involving the metal plates with relatively complex shapes at their edge parts, gas generated during the laser welding can be discharged to the outside of the case through the opening of the first metal plate, and the raised portion of the second metal plate can prevent the intrusion of welding spatters into the interior of the case.

### SUMMARY

Meanwhile, the present inventor aims to provide a novel method for manufacturing an electricity storage device that is suitable for suppressing the intrusion of welding spatters into the interior of a case when a closing plate for closing an opening of a case body is welded to the case body, and also to provide an electricity storage device manufactured by this method.

A method for manufacturing an electricity storage device disclosed herein includes the steps of: preparing a case body having an opening on at least one side thereof; preparing a closing plate for closing the opening; and laser-welding the case body and the closing plate with the closing plate mounted on the case body so as to close the opening. The closing plate prepared in the step of preparing the closing plate includes: a closing portion that covers the opening, while overlapping an edge of the opening; and an insertion portion inserted into the opening along an inner side of the case body with the closing plate closing the opening. In the step of laser-welding the case body and the closing plate, an area located on the closing portion side relative to a boundary between the edge of the opening and the closing portion is irradiated with laser light, thereby welding the edge of the opening and the closing portion at the boundary.

According to such a method, the intrusion of welding spatters into the interior of the case is suppressed in the step of laser-welding the case body and the closing plate.

### BRIEF DESCRIPTION OF THE DRAWINGS

FIG. 1 is a perspective view showing an electricity storage device according to one embodiment of the present disclosure.
FIG. 2 is another perspective view showing the electricity storage device shown in FIG. 1, with its top and bottom reversed.
FIG. 3 shows an internal structure of the electricity storage device shown in FIG. 1.
FIG. 4 is a flowchart of a method for manufacturing an electricity storage device according to one embodiment of the present disclosure.
FIG. 5 is a side view of the closing plate prepared in a closing plate preparation step.
FIG. 6 is a partially enlarged cross-sectional view showing a state where the closing plate is mounted onto a case body in the method for manufacturing an electricity storage device.
FIG. 7 is a partially enlarged cross-sectional view showing a welding step in the method for manufacturing an electricity storage device.
FIG. 8 is a partially enlarged cross-sectional view showing a state where a molten pool and a keyhole are formed during the welding step shown in FIG. 7.
FIG. 9 is a partially enlarged cross-sectional view showing a state after the welding step shown in FIG. 8.
FIG. 10 is a partially enlarged cross-sectional view showing a welding step of a modification of the method for manufacturing the electricity storage device shown in FIG. 1.

### DETAILED DESCRIPTION

Hereinafter, embodiments of the technology disclosed herein will be described with reference to the drawings. It is apparent that the embodiments described herein are not intended to particularly limit the present disclosure. The drawings are schematic and do not necessarily reflect actual products. Members and portions that have the same actions are denoted by the same symbols as appropriate, and a redundant description thereof is omitted as appropriate. In the present specification, unless otherwise specified, expressions of numerical ranges such as "X to Y" shall be understood to mean "X or greater and Y or less".

In the present specification, "electricity storage device" refers to a device capable of charging and discharging. Examples of the electricity storage device generally encompass batteries referred to as lithium-ion batteries and lithium secondary batteries, as well as lithium polymer batteries, nickel-hydrogen batteries, and the like. A secondary battery generally refers to a battery capable of repeated charging and discharging, accompanied by transfer of charge carriers between a positive electrode and a negative electrode. The electricity storage device may use a liquid electrolyte or a solid electrolyte. For example, the secondary battery may be a so-called liquid electrolyte secondary battery, which uses a liquid electrolyte, or a so-called all-solid-state battery, which uses a solid electrolyte. Furthermore, the "electricity storage devices" also encompass capacitors such as electric double-layer capacitors and lithium-ion capacitors.

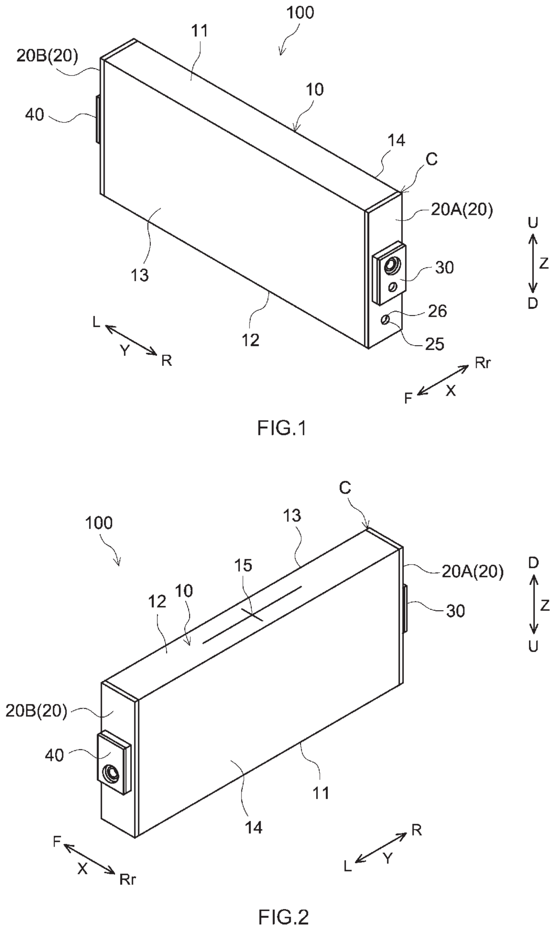

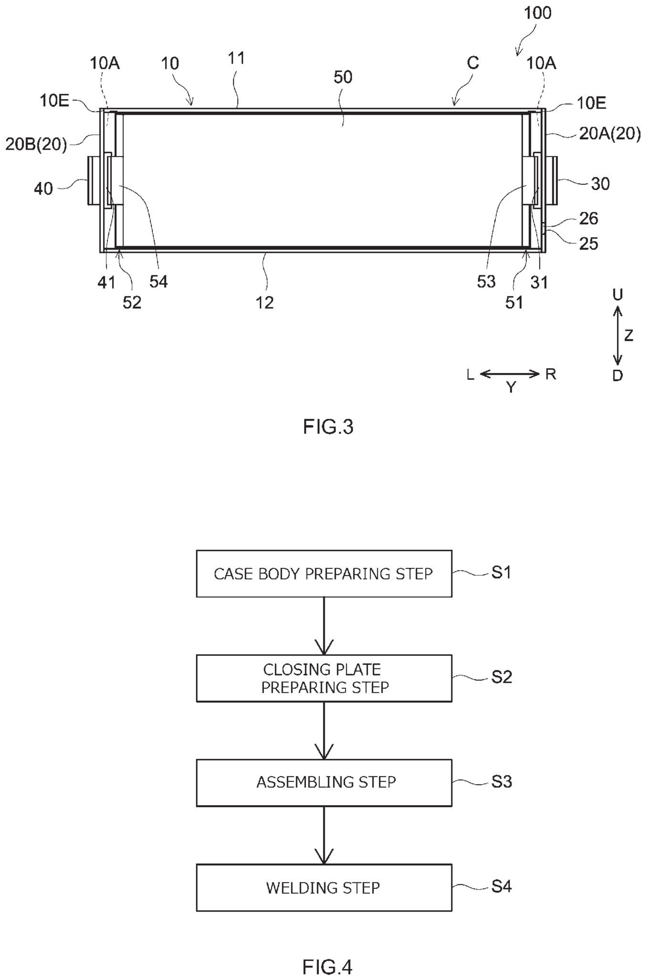

FIG. 1 is a perspective view showing an electricity storage device 100 according to one embodiment of the present invention. FIG. 2 is another perspective view of the electricity storage device 100 of FIG. 1, with its top and bottom sides reversed. FIG. 3 shows an internal structure of the electricity storage device 100. In the following description, reference symbols F, Rr, L, R, U, and D in the drawings represent front, rear, left, right, up, and down, respectively, and reference symbols X, Y, and Z in the drawings represent a thickness direction of the electricity storage device 100, a width direction orthogonal to the thickness direction, and an up-down direction orthogonal to both the width direction and the thickness direction, respectively.

As shown in FIGS. 1 to 3, the electricity storage device 100 includes a case body 10, two closing plates 20 (closing plate 20A and closing plate 20B), a positive electrode terminal 30, a negative electrode terminal 40, an electrode assembly 50 (shown in FIG. 3), and a liquid electrolyte (not shown). In the present embodiment, the electricity storage device 100 is a lithium-ion secondary battery.

The case body 10 and the closing plates 20A and 20B form a case C of the electricity storage device 100. The case C accommodates the electrode assembly 50 and the liquid electrolyte. The case C has a box shape. The case C has a flat, rectangular parallelepiped (e.g., rectangular prismatic) outer shape.

As shown in FIG. 3, in the present embodiment, the case body 10 is a rectangular tubular case having openings 10A at both ends thereof (that is, in the present embodiment, the case body 10 has both side surfaces thereof open). Specifically, the case body 10 has edge portions 10E at both ends thereof in the width direction Y, each edge portion 10E defining the corresponding opening 10A. Each edge portion 10E surrounds the opening 10A. In other words, the edge portions 10E are the edges of the openings 10A. The case body 10 has a shape extending in the width direction Y. Such a case body 10 is made of metal. Examples of the material constituting the case body 10 include aluminum, aluminum alloys, iron, and iron alloys. From the viewpoint of achieving both weight reduction and required rigidity of the case body 10, the material constituting the case body 10 is preferably aluminum or an aluminum alloy mainly composed of aluminum.

As shown in FIGS. 1 and 2, the case body 10 has a pair of narrow side surfaces 11 and 12 and a pair of wide side surfaces 13 and 14 as case walls. Each of the narrow side surfaces 11 and 12 has a substantially rectangular shape that has long sides extending in the width direction Y and short sides extending in the thickness direction X and spreads in the width direction Y and the thickness direction X. The narrow side surfaces 11 and 12 in a pair are opposed to each other in the up-down direction Z. The narrow side surface 11 forms an upper surface of the case C or the case body 10. The narrow side surface 12 forms a lower surface of the case body 10.

Each of the wide side surfaces 13 and 14 has a substantially rectangular shape that has long sides extending in the width direction Y and short sides extending in the up-down direction Z and spreads in the width direction Y and the up-down direction Z. The wide side surfaces 13 and 14 in a pair are opposed to each other in the thickness direction X. The wide side surface 13 forms a front surface of the case body 10. The wide side surface 14 forms a rear surface of the case body 10. One of the long sides of the wide side surface 13 (front surface)is connected to one of the long sides of the narrow side surface 11 (upper surface), while the other long side of the wide side surface 13 is connected to one of the long sides of the narrow side surface 12 (lower surface). One of the long sides of the wide side surface 14 (rear surface) is connected to the other long side of the narrow side surface 11, while the other long side of the wide side surface 14 is connected to the other long side of the narrow side surface 12.

One end portion (right end portion in FIGS. 1 and 2) of each of the narrow side surfaces 11 and 12 and the wide side surfaces 13 and 14 in the width direction Y forms one edge portion 10E of the case body 10 (as shown in FIG. 3), while the other end portion (left end portion in FIGS. 1 and 2) thereof in the width direction Y forms the other edge portion 10E of the case body 10 (as shown in FIG. 3). Such a case body 10 is formed, for example, by bending a single metal plate into a tubular shape and then joining its seam. An example of the joining method is welding.

In the present embodiment, as shown in FIG. 2, a gas release valve 15 is provided on the narrow side surface 12 (lower surface). The gas release valve 15 is configured to rupture when the pressure inside the case C reaches a predetermined value or higher. When the gas release valve 15 ruptures, the gas inside the case C is released to the outside of the case C, thereby preventing or suppressing further pressure increase inside the case C. Such a gas release valve 15 may be a cross-shaped notch, a linear notch (in the form of a vertical or horizontal line only), an elliptical valve (with a notch therein), or a circular valve (with a notch therein). FIG. 2 exemplarily shows a case where the gas release valve 15 is a cross-shaped notch. The dimensions (length and depth) of the notch of the gas release valve 15 can be determined as appropriate in consideration of, for example, the pressure resistance strength of the case C. In the case C, the gas release valve 15 may be provided at a position other than the narrow side surface 12, for example, on the narrow side surface 11, the wide side surface 13, the wide side surface 14, the closing plate 20A, or the closing plate 20B. The number of gas release valves 15 provided in the case C may be one or two or more. FIG. 2 exemplarily shows a case where the number of gas release valves 15 is one.

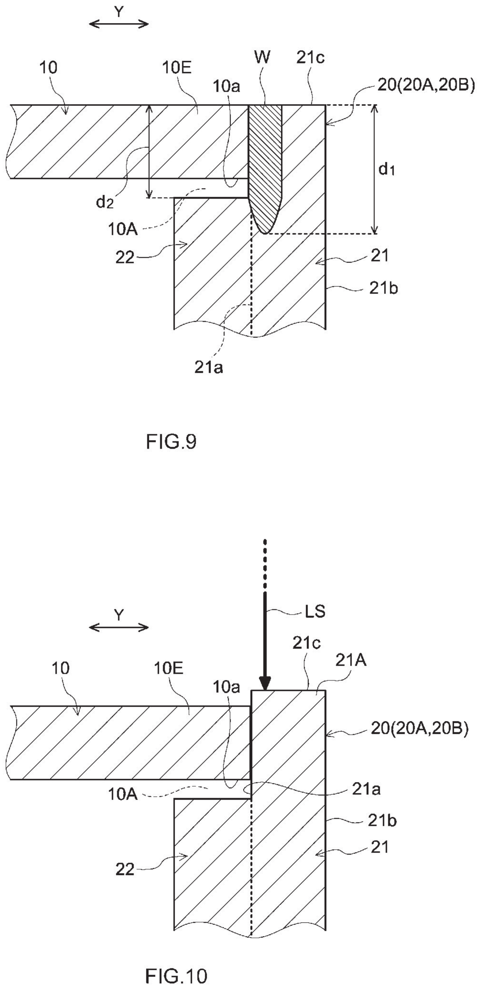

The closing plates 20 (closing plate 20A and closing plate 20B) are members that close the openings 10A (see FIG. 3) of the case body 10. The closing plate 20A closes one opening 10A of the case body 10 (the right-side opening in FIG. 3), while the closing plate 20B closes the other opening 10A (the left-side opening in FIG. 3). Each closing plate 20 closes the corresponding opening 10A by being welded, over its entire periphery, to a corresponding one of the edge portions 10E (edge of the opening 10A) of the case body 10. This welding method will be described later, and FIG. 9 is an enlarged cross-sectional view showing a weld portion and its vicinity between the case body 10 and the closing plate 20 after this welding. As shown in FIG. 9, in the present embodiment, each closing plate 20 has a closing portion 21 and an insertion portion 22.

In the present embodiment, the closing portion 21 has a first surface 21a, a second surface 21b, and an outer peripheral edge 21c. In the closing portion 21, the first surface 21a is located on the opening 10A side of the case body 10, while the second surface 21b is located on a side opposite to the first surface 21a. The outer peripheral edge 21c surrounds the first surface 21a and the second surface 21b. In the present embodiment, the closing portion 21 is a substantially rectangular flat plate in plan view and has a size and shape capable of closing the opening 10A of the case body 10. Such a closing portion 21 covers the opening 10A of the case body 10, while overlapping the edge of the opening 10A. Specifically, the closing portion 21 of the closing plate 20 faces the opening 10A of the case body 10 and the edge portion 10E, which is the edge of the case body 10, and thereby closes the opening 10A.

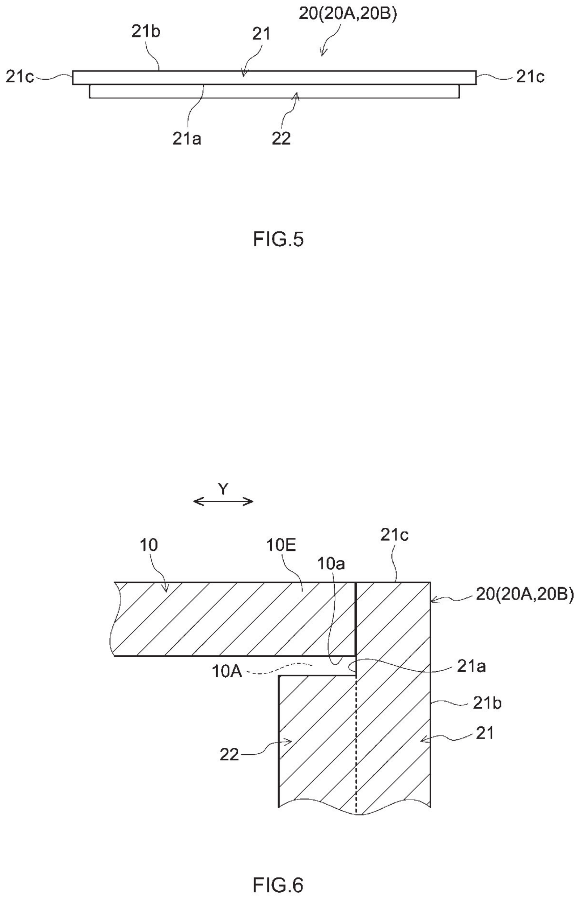

The insertion portion 22 of the closing plate 20 is located on the first surface 21a of the closing portion 21 and is inserted into the opening 10A along an inner side 10a of the edge portion 10E of the case body 10 (in FIGS. 6 to 10, the boundary between the closing portion 21 and the insertion portion 22 is indicated by broken lines).

Such a closing plate 20 and an edge portion 10E of the case body 10 are joined over the entire periphery of the opening 10A in the circumferential direction, whereby the case C is hermetically sealed (made airtight). Specifically, the case C includes weld portions W, each weld portion W being located in a region including the boundary between the case body 10 and the corresponding closing plate 20. The weld portion W is a part that has undergone melting by laser welding described later and then solidified. The weld portion W has a penetration depth d1 in a direction orthogonal to the width direction Y. The weld portion W has the peak of the penetration depth d1 in the width direction Y at an area located on the closing portion 21 side relative to the boundary between the edge (edge portion 10E) of the opening 10A and the closing portion 21. Furthermore, the weld portion W also has the peak of the penetration depth d1 in the width direction Y at the area located on the closing portion 21 side relative to the boundary, indicated by the broken lines in FIGS. 6 to 10, between the closing portion 21 and the insertion portion 22.

The penetration depth d1 is longer than a distance d2 from the outer peripheral edge 21c of the closing portion 21 to the insertion portion 22 in the direction orthogonal to the width direction Y. From the viewpoint of reliably welding a butt-joint portion between the case body 10 and the closing plate 20 to ensure the strength of the welded areas, the ratio (d1/d2) of the penetration depth d1 to the distance d2 is preferably 1.1 or greater, more preferably 1.2 or greater, and even more preferably 1.3 or greater. From the viewpoint of improving the efficiency of the welding step described later and consequently improving the manufacturing efficiency of the electricity storage device 100, the ratio (d1/d2) is preferably 2.0 or less, more preferably 1.7 or less, and even more preferably 1.5 or less.

In the present embodiment, as shown in FIG. 1, a liquid injection hole 25 is provided in the closing plate 20A. The liquid injection hole 25 is a hole for injecting a liquid electrolyte into the interior of the case C after the closing plate 20A and the closing plate 20B are assembled to the case body 10. After the liquid electrolyte is injected, the liquid injection hole 25 is sealed by a sealing member 26. In the case C, such a liquid injection hole 25 may be provided in the closing plate 20B or the case body 10, instead of the closing plate 20A. Alternatively, in the case C, the liquid injection hole 25 may be provided on the surface of the case C where the above-described gas release valve 15 is provided or on a different surface of the case C from the surface where the gas release valve 15 is provided.

As shown in FIG. 1, the positive electrode terminal 30 is attached to the closing plate 20A. Specifically, the closing plate 20A has a terminal opening that penetrates the closing portion 21 in the thickness direction, and the positive electrode terminal 30 is attached to the opening with a gasket made of an insulating material being interposed between the terminal and the closing plate 20A. For example, caulking is used as a means for attaching the positive electrode terminal 30 to the closing plate 20A. The positive electrode terminal 30 is exposed to the outside of the case C and also exposed to the inside of the case C. As shown in FIG. 3, inside the case C, the positive electrode terminal 30 is connected to a positive electrode current collector portion 31. Such a positive electrode terminal 30 is preferably made of metal, and more preferably aluminum or an aluminum alloy.

As shown in FIG. 2, the negative electrode terminal 40 is attached to the closing plate 20B. Specifically, the closing plate 20B has a terminal opening that penetrates its closing portion 21 in the thickness direction, and the negative electrode terminal 40 is attached to the opening with a gasket made of an insulating material being interposed between the terminal and the closing plate 20B. For example, caulking is used as a means for attaching the negative electrode terminal 40 to the closing plate 20B. The negative electrode terminal 40 is exposed to the outside of the case C and also exposed to the inside of the case C. As shown in FIG. 3, inside the case C, the negative electrode terminal 40 is connected to a negative electrode current collector portion 41. Such a negative electrode terminal 40 is preferably made of metal, and more preferably copper or a copper alloy.

As shown in FIG. 3, the electrode assembly 50 is accommodated in the case C or the case body 10. The electrode assembly 50 has a positive electrode 51 and a negative electrode 52. In the present embodiment, the electrode assembly 50 is a so-called wound electrode assembly. The electrode assembly 50 is formed by winding a laminated body around a winding axis in the longitudinal direction, the laminated body including the band-shaped positive electrode 51 and the band-shaped negative electrode 52 which are laminated with a band-shaped separator (not shown) interposed therebetween. Instead of this configuration, the electrode assembly 50 may be a laminated electrode assembly in which rectangular positive electrodes and rectangular negative electrodes are stacked on each other in an insulated state.

In the present embodiment, the outer shape of the electrode assembly 50 is flat. The electrode assembly 50 has a pair of curved portions and a pair of flat surfaces connecting the pair of curved portions. Such an electrode assembly 50 (wound electrode assembly) is accommodated in the case C with its winding axis oriented along the width direction Y. The pair of curved portions of the electrode assembly 50 respectively faces the pair of narrow side surfaces 11 and 12 of the case body 10. Instead of such an accommodated arrangement, the electrode assembly 50 may be accommodated in the case C with its winding axis oriented along the up-down direction Z.

The positive electrode 51 of the electrode assembly 50 has, for example, a laminated structure composed of a positive electrode current collector and a positive electrode active material layer. The positive electrode current collector is, for example, band-shaped and made of a conductive metal. Examples of the conductive metal include aluminum, aluminum alloys, nickel, and stainless steel. The positive electrode current collector is preferably a conductive metal foil, and more preferably an aluminum foil. The positive electrode active material layer is provided, for example, in a band shape along the longitudinal direction on at least one surface of the band-shaped positive electrode current collector. The positive electrode active material layer contains a positive electrode active material capable of reversibly storing and releasing charge carriers, and a binder. The positive electrode active material is preferably a lithium transition-metal composite oxide. Specific examples of such oxides include a lithium cobalt composite oxide, a lithium manganese composite oxide, a lithium nickel composite oxide, a lithium nickel manganese composite oxide, a lithium nickel cobalt composite oxide, and a lithium nickel cobalt manganese composite oxide. An example of the binder is polyvinylidene fluoride (PVdF).

The negative electrode 52 of the electrode assembly 50 has, for example, a laminated structure composed of a negative electrode current collector and a negative electrode active material layer. The negative electrode current collector is, for example, band-shaped and made of a conductive metal. Examples of conductive metals for the negative electrode include copper, copper alloys, nickel, and stainless steel. The negative electrode current collector is preferably a conductive metal foil, and more preferably a copper foil. The negative electrode active material layer is provided, for example, in a band shape along the longitudinal direction on at least one surface of the band-shaped negative electrode current collector. The negative electrode active material layer contains a negative electrode active material capable of reversibly storing and releasing charge carriers, and a binder. Examples of the negative electrode active material include carbon materials such as graphite and carbon. Examples of the binder for the negative electrode active material include styrene-butadiene rubber (SBR) and carboxymethyl cellulose (CMC).

The separator is a member that insulates the positive electrode active material layer and the negative electrode active material layer from each other, while retaining an ion-conductive liquid electrolyte between both layers. As the separator, a porous resin sheet made of a polyolefin resin is suitable. Examples of the polyolefin resin include polyethylene (PE) and polypropylene (PP). A heat-resistance layer (HRL) containing an inorganic filler may be provided on the surface of the separator. Examples of the material for the inorganic filler include alumina, boehmite, aluminum hydroxide, and titania.

As shown in FIG. 3, the electrode assembly 50 includes positive electrode tabs 53 and negative electrode tabs 54, which extend in opposite directions from each other. The positive electrode tabs 53 extend toward the closing plate 20A at one end (the right side in FIG. 3) of the electrode assembly 50 in the width direction Y. The positive electrode tabs 53 form a part of the positive electrode 51. Specifically, each positive electrode tab 53 is a portion of the above-described (band-shaped) positive electrode current collector of the positive electrode 51 that is exposed without having a positive electrode active material layer laminated on its surface. Multiple positive electrode tabs 53 are provided at predetermined intervals in the longitudinal direction of the positive electrode current collector. In the electrode assembly 50 as the wound electrode assembly, such multiple positive electrode tabs 53 are stacked and connected to the positive electrode current collector portion 31. The electrode assembly 50 is electrically connected to the above-described positive electrode terminal 30 via the positive electrode current collector portion 31. The negative electrode tabs 54 extend toward the closing plate 20B at the other end (the left side in FIG. 3) of the electrode assembly 50 in the width direction Y. The negative electrode tabs 54 form a part of the negative electrode 52. Specifically, each negative electrode tab 54 is a portion of the above-described (band-shaped) negative electrode current collector of the negative electrode 52 that is exposed without having a negative electrode active material layer laminated on its surface. Multiple negative electrode tabs 54 are provided at predetermined intervals along the longitudinal direction of the negative electrode current collector. In the electrode assembly 50 as the wound electrode assembly, such multiple negative electrode tabs 54 are stacked and connected to the negative electrode current collector portion 41. The electrode assembly 50 is electrically connected to the above-described negative electrode terminal 40 via the negative electrode current collector portion 41.

The liquid electrolyte is accommodated inside the case C together with the electrode assembly 50. The electrode assembly 50 is impregnated with the liquid electrolyte. The liquid electrolyte is typically a non-aqueous liquid electrolyte (nonaqueous electrolyte solution) that contains a non-aqueous solvent and a supporting salt. Examples of non-aqueous solvents include carbonates such as ethylene carbonate (EC), dimethyl carbonate (DMC), and ethyl methyl carbonate (EMC). The supporting salt is, for example, a fluorine-containing lithium salt. Examples of fluorine-containing lithium salts include lithium hexafluorophosphate (LiPF₆) and lithium bis(fluorosulfonyl)imide (F₂LiNO₄S₂). Excess liquid electrolyte not impregnated in the electrode assembly 50 may be retained inside the case C. Instead of such a liquid electrolyte, a solid-state electrolyte (solid electrolyte) integrated with the electrode assembly 50 may be used.

FIG. 4 is a flowchart illustrating an example of a method for manufacturing the electricity storage device 100. The method for manufacturing the electricity storage device 100 includes a case body preparing step S1, a closing plate preparing step S2, an assembling step S3, and a welding step S4.

In the case body preparing step S1, the case body 10 having the openings 10A at both ends thereof (the case body 10 having at least one side open) is prepared. A method for preparing the case body 10 in this step is not particularly limited. The case body 10 may be prepared, for example, by bending a rectangular flat plate into shape.

In the closing plate preparing step S2, the closing plates 20 (closing plates 20A and 20B) for closing the openings 10A of the case body 10 are prepared. In this step, the closing plate 20A is prepared with the above-described positive electrode terminal 30 attached thereto, while the closing plate 20B is prepared with the above-described negative electrode terminal 40 attached thereto. As shown in FIG. 5, each closing plate 20 prepared in this step includes the closing portion 21 and the insertion portion 22 (the illustration of the positive electrode terminal 30 and the negative electrode terminal 40, which are the electrode terminals, is omitted in FIG. 5).

In the present embodiment, the closing portion 21 has the first surface 21a, the second surface 21b, and the outer peripheral edge 21c. The first surface 21a is a surface facing the opening 10A of the case body 10 in the electricity storage device 100, while the second surface 21b is located on the side opposite to the first surface 21a in the closing portion 21. The outer peripheral edge 21c surrounds the first surface 21a and the second surface 21b. In the present embodiment, the closing portion 21 is a substantially rectangular flat plate in plan view and has a size and shape capable of closing the opening 10A of the case body 10. The insertion portion 22 is located on the first surface 21a of the closing portion 21 and has a size and shape capable of being inserted into the opening 10A of the case body 10.

A method for preparing the closing plate 20 is not particularly limited. The closing plate 20 is prepared, for example, by performing machining, such as drilling, on a single rectangular flat plate and then attaching the electrode terminal (positive electrode terminal 30, negative electrode terminal 40) and the like thereto. The closing plate preparing step S2 may be performed before the case body preparing step S1, or after this step S1. The closing plate preparing step S2 may also be performed at the same time as the case body preparing step S1.

Next, in the assembling step S3, insertion of the electrode assembly 50 into the interior of the case body 10 and electrical connection of the electrode terminals (positive electrode terminal 30 and negative electrode terminal 40) to the electrode assembly 50 are performed. The assembling step S3 can be performed, for example, in the following way.

First, the positive electrode current collector portion 31 is connected to the plurality of positive electrode tabs 53 that are stacked in the electrode assembly 50, while the negative electrode current collector portion 41 is connected to the plurality of negative electrode tabs 54 that are staked therein. An example of each connection method is laser welding (the same applies to a connection method described later in the assembling step S3). Then, the negative electrode current collector portion 41 connected to the negative electrode tabs 54 is connected to the negative electrode terminal 40 attached to the closing plate 20B. A portion of the negative electrode terminal 40 exposed to the inner side of the case in the closing plate 20B is connected to the negative electrode current collector portion 41 (see FIG. 3). Then, the electrode assembly 50, accompanied by the closing plate 20B with the negative electrode terminal 40 attached thereto, is inserted into the inside of the case body 10 through one opening 10A of the case body 10 (the left-side opening 10A in FIG. 3), with its positive electrode tab 53 side facing forward. Next, the positive electrode current collector portion 31 connected to the positive electrode tabs 53 of the electrode assembly 50 is connected to the positive electrode terminal 30 attached to the closing plate 20A. A portion of the positive electrode terminal 30 exposed to the inner side of the case in the closing plate 20A is connected to the positive electrode current collector portion 31 (see FIG. 3). The assembling step S3 can be performed, for example, in the following way. The assembling step S3 may also be performed by other procedures.

Next, in the welding step S4, each closing plate 20 is mounted onto the case body 10 so as to close the opening 10A, and the case body 10 and the closing plate 20 are then laser-welded in that state. FIG. 6 is a partially enlarged cross-sectional view showing a state where the closing plate 20 is mounted onto the case body 10. As shown in FIG. 6, with the closing portion 21 of the closing plate 20 closing the opening 10A, the insertion portion 22 is inserted into the opening 10A along the inner side 10a of the edge portion 10E of the case body 10.

After the closing plate 20 is mounted onto the case body 10, but before it is welded, a clamp jig may be used to press the edge portion 10E of the case body 10 and its vicinity against the insertion portion 22 of the closing plate 20. The clamp jig includes: for example, a pair of first clamps that press the edge portions 10E and their vicinities of the pair of narrow side surfaces 11 and 12 in a direction orthogonal to the narrow side surfaces 11 and 12; and a pair of second clamps that press the edge portions 10E and their vicinities of the pair of wide side surfaces 13 and 14 in a direction orthogonal to the wide side surfaces 13 and 14. With such a clamp jig, the pair of first clamps can press the edge portions 10E and their vicinities of the narrow side surfaces 11 and 12 against the respective insertion portions 22 of the closing plates 20, while the pair of second clamps can press the edge portions 10E and their vicinities of the wide side surfaces 13 and 14 against the respective insertion portions 22. This pressing operation positions the edge portions 10E of the case body 10 with respect to the closing plates 20 or the insertion portions 22. That is, each insertion portion 22 functions as a positioning reference. After forming, the case body 10 tends to develop an outward bulge in its natural state, particularly at the central portions in the up-down direction Z (FIGS. 1 and 2) of the wide side surfaces 13 and 14. In the state where the closing plate 20 is mounted to the opening 10A or edge portion 10E of such a case body 10, a gap is likely to occur between the case body 10 and the closing plate 20. Meanwhile, the bulge can be corrected by mounting the closing plate 20 onto the edge portion 10E of the case body 10 and then pressing the edge portion 10E and its vicinity of the case body 10 against the insertion portion 22 of the closing plate 20 using the clamp jig. This makes it less likely for a gap to occur between the case body 10 and the closing plates 20. The smaller the gap, the more effectively the intrusion of welding spatters into the interior of the case body 10 or the case C tends to be suppressed during laser welding.

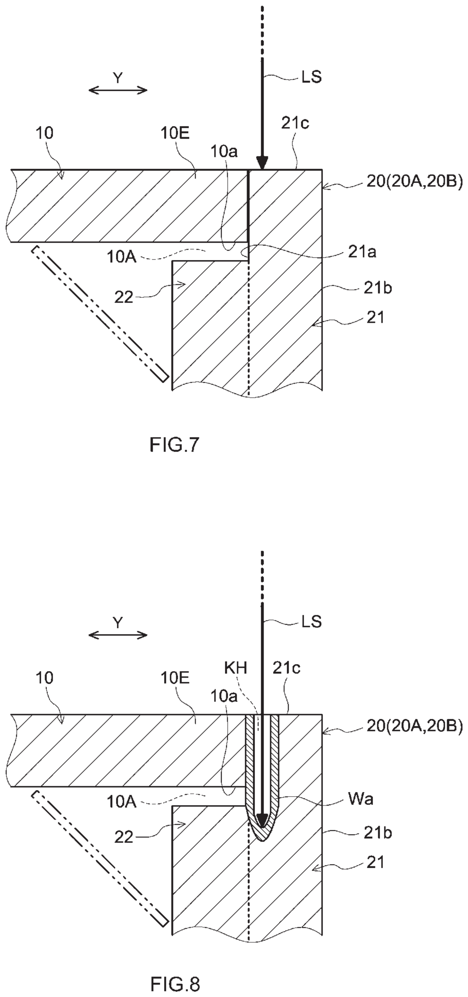

In the welding step S4, as shown in FIG. 7, an area located on the closing portion 21 side relative to the boundary between the edge (edge portion 10E) of the opening 10A and the closing portion 21 of the closing plate 20 is irradiated with the laser light LS, thereby welding the edge of each opening 10A and the corresponding closing portion 21 of the closing plate 20 at their boundary. The irradiation direction of the laser light LS to the closing portion 21 is a direction intersecting (e.g., orthogonal to) the width direction Y. In the present embodiment, preferably, the closing portion 21 is continuously irradiated with the laser light LS along the circumferential direction of the opening 10A, so that the case body 10 and the closing plate 20 are continuously welded in the circumferential direction. Thus, the edge portion 10E of the case body 10 and the closing plate 20 is joined over the entire area around the opening 10A in the circumferential direction of the opening 10A, thereby forming a hermetically sealed case C.

In the welding step S4, the irradiation of the laser light LS is performed in the following way such that a molten portion and a keyhole are formed at a laser-irradiated area of the closing portion 21 and its vicinity. Specifically, upon laser irradiation onto the closing portion 21, a molten portion Wa (see FIG. 8) is first formed at the laser-irradiated area of the closing portion 21 and its vicinity, and subsequently a keyhole KH is formed within the molten portion Wa as shown in FIG. 8. The molten portion Wa is formed to extend over a part of the closing plate 20 (part of the closing portion 21 and part of the insertion portion 22) and at least a part of the edge portion 10E of the case body 10. The keyhole KH is formed within the molten region Wa so as not to communicate with the interior of the case body 10. In the welding step S4, the irradiation of the laser light LS is performed under laser irradiation conditions that allow the molten portion Wa and the keyhole KH to be formed as described above. The laser irradiation conditions include: the type of laser light (classified based on the energy distribution in the laser light cross-section), laser output, scanning speed of the laser-irradiated area (welding speed), the size such as a spot diameter at the laser-irradiated area, and the distance (offset amount) from the boundary between the edge of the opening 10A and the closing portion 21 to the center of the laser-irradiated area. Various laser welding devices that satisfy these laser irradiation conditions can be used in the welding step S4.

Examples of the above-described types of laser light, classified based on the energy distribution in the laser beam cross-section, include a ring mode laser, a Gaussian laser, and a flat-top laser. Examples of the ring mode laser include a single-ring-type ring mode laser, and a ring mode laser having a central portion and a ring portion surrounding the central portion in the laser beam cross-section. According to the latter type of ring-mode laser, the residual heat in the ring portion helps stabilize a molten pool formed at the laser-irradiated area where the intended weld line is scanned by the laser. As a result, the waviness of the molten pool is reduced, and therefore the generation of welding spatters is more likely to be reduced.

When a Gaussian laser or a flat-top laser is used as the laser light, from the viewpoint of forming a sufficient molten portion Wa (over the edge portion 10E) and a sufficient keyhole KH by the laser irradiation, the laser light output (laser output) is preferably 500 W or more, more preferably 700 W or more, and even more preferably 800 W or more. From the viewpoint of suppressing excessive energy input to the laser-irradiated area to avoid formation of a keyhole (through keyhole) that communicates with the interior of the case C, the laser output is preferably 6000 W or less, more preferably 5500 W or less, and even more preferably 5000 W or less. In addition, from the viewpoint of suppressing excessive energy input to the laser-irradiated area to avoid formation of the through keyhole described above, the scanning speed (welding speed) at the laser-irradiated area is preferably 150 mm/s or higher, more preferably 180 mm/s or higher, and even more preferably 200 mm/s or higher.

When a ring mode laser having the central portion and the ring portion is used as the laser light, the output of the central portion is preferably in the range of 600 W to 800 W from the viewpoint of forming a sufficient molten portion Wa and a sufficient keyhole KH by laser irradiation. Furthermore, when the ring mode laser having the central portion and the ring portion is used as the laser light, the output of the ring portion is preferably in the range of 5000 W to 6000 W from the viewpoint of ensuring an appropriate welding depth at the weld portion W.

When the ring mode laser having the central portion and the ring portion is used as the laser light, the diameter of the center portion (i.e., the diameter or spot size at the laser-irradiated area) is preferably 60 µm or more, and more preferably 70 µm or more, from the viewpoint of forming an appropriately sized keyhole at the laser-irradiated area to suppress or prevent blowhole formation. From the viewpoint of suppressing or preventing the formation of a through keyhole at the laser-irradiated area, the diameter is preferably 90 µm or less, and more preferably 80 µm or less. When the ring mode laser having the central portion and the ring portion is used as the laser light, the diameter of the ring portion (outer diameter at the laser-irradiated area) is preferably 800 µm or more from the viewpoint of ensuring adequate heat input into the case body 10 in the vicinity of the laser-irradiated area to form an appropriate molten portion Wa. The diameter is preferably 1000 µm or less from the viewpoint of ensuring adequate energy density at the laser-irradiated area to form an appropriate molten portion Wa.

When a Gaussian laser or a flat-top laser is used as the laser light, the size (spot diameter) at the laser-irradiated area is preferably in the range of 60 µm to 90 µm, and more preferably in the range of 70 µm to 80 µm, from the viewpoint of forming a sufficient molten portion Wa and a sufficient keyhole KH by the laser irradiation.

The offset amount at the laser-irradiated area (i.e., the distance from the edge of the closing portion facing the boundary to the center of the laser-irradiated area, in the direction orthogonal to the boundary between the edge of the opening 10A and the closing portion 21) is preferably 0.15 mm or more, more preferably 0.20 mm or more, and even more preferably 0.25 mm or more, from the viewpoint of avoiding formation of the through keyhole. The distance from the boundary between the edge (edge portion 10E) of the opening 10A and the closing portion 21 to the laser-irradiated area is preferably 0.55 mm or less, more preferably 0.50 mm or less, and even more preferably 0.45 mm or less, from the viewpoint of appropriately forming the molten portion Wa (which extends across a part of the closing plate 20 and at least a part of the edge portion 10E of the case body 10). Moreover, from the viewpoint of avoiding formation of the through keyhole, the offset amount is preferably twice or more, more preferably 2.5 times or more, and even more preferably 3.0 times or more the size of the laser-irradiated area, such as the spot diameter of the laser beam. From the viewpoint of appropriately forming the molten portion Wa (extending over a part of the closing plate 20 and at least a part of the edge portion 10E of the case body 10), the offset amount is preferably 8 times or less, more preferably 7 times or less, and even more preferably 6 times or less the size of the laser-irradiated area, such as the spot diameter of the laser light.

After the welding step S4, steps such as a liquid injection step of injecting the liquid electrolyte into the case body 10, an aging step of charging the electricity storage device 100 and then leaving it for a predetermined period, and an inspection step of inspecting internal short-circuiting of the electricity storage device 100 are performed as appropriate. In the liquid injection step, specifically, the liquid electrolyte is injected into the case body 10 through the above-described liquid injection hole 25. In this way, the electricity storage device 100 described above can be manufactured.

In the welding step S4 of the method for manufacturing the electricity storage device described above, the molten portion Wa and the keyhole KH are temporarily formed at the laser-irradiated area of the closing portion 21 and its vicinity as shown in FIG. 8 by irradiating, with the laser light LS, the area located on the closing portion 21 side relative to the boundary between the edge (edge portion 10E) of the opening 10A and the closing portion 21 of the closing plate 20 as shown in FIG. 7. The molten portion Wa is formed to extend over a part of the closing plate 20 (part of the closing portion 21 and part of the insertion portion 22) and at least a part of the edge portion 10E of the case body 10. The keyhole KH is formed within the molten region Wa so as not to communicate with the interior of the case body 10. Since the welding performed in the welding step S4 is keyhole welding (welding that involves keyhole formation), it is suitable for achieving a high processing speed (scanning speed at the laser-irradiated area). Therefore, this welding is suitable for suppressing thermal effects around the welded area of the case C to minimize material distortion. This contributes to ensuring an adequate pressure resistance strength across the entire case C, including the welded area. In addition, during the laser welding in the welding step S4, the formation of a keyhole that communicates with the interior of the case C is avoided (i.e., non-penetrating welding is implemented), which reduces the likelihood of intrusion of welding spatters into the interior of the case C.

In the step of laser-welding the case body 10 and the closing plates 20 in this way, the area located on the closing portion 21 side relative to the boundary between the edge portion 10E of the opening 10A and the closing portion 21 is irradiated with the laser light LS, thereby welding the edge portion 10E of the opening 10A and the closing portion 21 at their boundary. That is, in the welding step S4, the irradiation of the laser light LS is performed at a position spaced appropriately toward the closing portion 21 side from the boundary between the edge portion 10E of the opening 10A and the closing portion 21. Consequently, it is desirable that a molten portion Wa with a required size be formed at the boundary between the edge portion 10E of the opening 10A and the closing portion 21. On the other hand, to prevent the formation of a keyhole that communicates with the interior of the case C, desirably, the area located on the closing portion 21 side relative to the boundary is irradiated with the laser light LS. From this viewpoint, the position irradiated with the laser light LS is desirably set to be appropriately spaced toward the closing portion 21 side from the boundary between the edge (edge portion 10E) of the opening 10A and the closing portion 21. Here, how far the position irradiated with the laser light LS is spaced toward the closing portion 21 side from the boundary between the edge (edge portion 10E) of the opening 10A and the closing portion 21 may be appropriately determined based on factors such as the intensity of the laser light LS and the spot size and shape thereof, which are required for welding, the material properties of the case body 10 and the closing plate 20, which are to be welded, and the like.

According to the inventor's findings, in the welding step S4, the irradiation of the laser light LS is preferably performed at a position spaced toward the closing portion 21 side from the boundary between the edge (edge portion 10E) of the opening 10A and the closing portion 21 by 0.15 mm to 0.55 mm (i.e., the above-described offset amount is preferably 0.15 mm to 0.55 mm). Such a configuration is preferable for appropriately forming the molten portion Wa (extending over a part of the closing plate 20 and at least a part of the edge portion 10E of the case body 10) while avoiding formation of the above-described through keyhole during the laser welding.

According to the inventor's findings, in the welding step S4, a ring mode laser having a central portion and a ring portion is preferably used for the laser irradiation. With this type of ring mode laser, the size (diameter) and laser output of each of the central portion and the ring portion can be independently adjusted, which facilitates the formation of the above-described molten portion Wa and keyhole KH within it.

According to the inventor's findings, in the welding step S4, the irradiation of the laser light LS is preferably performed at a position spaced toward the closing portion 21 side from the boundary between the case body 10 and the closing portion 21 by a distance of 2 times to 8 times the spot diameter of the laser light LS (i.e., the above-described offset amount is preferably 2 times to 8 times the spot diameter of the laser light LS). Such a configuration is preferable for appropriately forming the molten portion Wa (extending over a part of the closing plate 20 and at least a part of the edge portion 10E of the case body 10) while avoiding formation of the above-described through keyhole during the laser welding.

According to the inventor's findings, in the welding step S4, the spot diameter at the laser-irradiated area is preferably in the range of 60 µm to 90 µm, and more preferably 70 µm to 80 µm as described above. This range is desirable for appropriately forming the molten portion Wa (extending over a part of the closing plate 20 and at least a part of the edge portion 10E of the case body 10), while avoiding formation of the through keyhole during the laser welding.

In the electricity storage device 100, as described above with reference to FIG. 9, the edge (edge portion 10E) of the opening 10A and the closing portion 21 are welded at their boundary (i.e., the weld portion W is formed), and the weld portion W has the peak of the penetration depth d1 at the area located on the closing portion 21 side relative to the boundary between the edge of the opening 10A and the closing portion 21. Such a weld portion W is formed by the laser welding described above, which achieves both the keyhole welding and the non-penetrating welding, in the welding step S4 during the manufacturing process of the electricity storage device 100. Therefore, the electricity storage device 100 having the weld portion W in the case C is suitable for achieving the same effects as those of the welding step S4 described above during the manufacturing process (implementing the keyhole welding while preventing the intrusion of welding spatters into the interior of the case, because of the implementation of the non-penetrating welding).

As shown in FIG. 10, the closing plate 20 prepared in the closing plate preparing step S2 may be shaped such that, when the closing plate 20 is mounted to the opening 10A of the case body 10, the closing portion 21 protrudes from the case body 10 in a direction orthogonal to the direction in which the opening 10A is open. In FIG. 10, such a protruding portion of the closing portion 21 is indicated as a protrusion 21A. In the welding step S4 following the closing plate preparing step S2, the area located on the closing portion 21 side relative to the boundary between the edge (edge portions 10E) of the opening 10A and the closing portion 21 of the closing plate 20 is irradiated with the laser light LS in the same way as in the welding step S4 described above with reference to FIGS. 7 to 9, thereby welding the edge of the opening 10A and the closing portion 21 of the closing plate 20 at their boundary. In this modification, the laser-irradiated area is specifically the protrusion 21A of the closing portion 21, the protrusion being positioned in the area located on the closing portion 21 side relative to the boundary between the edge (edge portion 10E) of the opening 10A and the closing portion 21 of the closing plate 20. Such laser welding allows the formed weld portion to surely have an adequate penetration depth, thereby making it easier to ensure welding strength.

The electricity storage device 100 is usable in various applications. The electricity storage device 100 can be suitably used, for example, as a power source (drive power supply) for a motor mounted on a vehicle such as a passenger car or a truck. The type of vehicle is not particularly limited, and examples thereof include a plug-in hybrid electric vehicle (PHEV), a hybrid electric vehicle (HEV), a battery electric vehicle (BEV), and the like.

The following is a description of test examples of the technology disclosed herein. However, the technology disclosed herein is not limited to that shown in these test examples.

### <Example 1>

First, a case body and closing plates were prepared. The case body was a rectangular tubular case (made of aluminum alloy) with openings at both ends, and had a sidewall thickness of 0.65 mm. Each closing plate was a lid (also made of aluminum alloy) with a substantially rectangular shape in plan view, including a closing portion (90 mm in length × 30 mm in width × 1.0 mm in thickness) and an insertion portion (1.0 mm in thickness) arranged on one surface thereof. It had a size and shape capable of closing the opening of the case body. The outer peripheral edge of the insertion portion was set back inward along the outer peripheral edge of the closing portion. The setback length from the outer peripheral edge of the closing portion to the outer peripheral edge of the insertion portion (corresponding to the distance d2 in FIG. 9) was 0.75 mm.

Next, a single-sided adhesive sheet (with an adhesive surface area of approximately 4 cm²), serving as a dust sampler, was placed in the vicinity of one of the openings inside the case body. Afterward, the closing plate was mounted on the edge portion (an edge of the opening) of the case body so as to close the opening. As shown by imaginary lines (chain double-dashed lines) in FIGS. 7 and 8, the adhesive sheet was placed inside the case body in such an orientation that its adhesive surface of the sheet faced the boundary between the case body and the closing plate. When the closing plate was mounted onto the edge portion of the case body, the insertion portion of the closing plate was inserted into the opening. Then, the edge portion of the case body and its vicinity was pressed against the insertion portion of the closing plate by using a predetermined clamping jig, and this state was maintained.

Next, the boundary between the edge (edge portion) of the opening of the case body and the closing portion of the closing plate was irradiated with the laser light, so that the laser-irradiated area was scanned therewith along the boundary by 20 mm, whereby the edge of the opening and the closing portion of the closing plate were welded together at their boundary (laser welding with a welding length of 20 mm). For this laser welding, a laser welding apparatus (model name: "YLS-3000/5000-SM-AMB", manufactured by IPG Photonics corporation) was used. As the laser light, a ring-mode laser was used which included a central portion (single-mode, wavelength of 1070 nm) and a ring portion surrounding the central portion (multi-mode, wavelength of 1070 nm) in the laser beam cross-section. The laser irradiation conditions were as follows: diameter of the central portion (diameter or spot diameter at the laser-irradiated area) of 72 µm; output of the central portion of 800 W; diameter of the ring portion (outer diameter at the laser-irradiated area) of 920 µm; inner diameter of the ring portion (inner diameter at the laser-irradiated area) of 210 µm; output of the ring portion of 5000 W; and scanning speed (welding speed) at the laser-irradiated area of 200 mm/s (note that the laser irradiation conditions are shown in Table 1). In Example 1, the boundary between the edge of the opening of the case body and the closing portion of the closing plate was irradiated with the laser light, so that the laser-irradiated area was scanned therewith to follow the boundary. Thus, the offset amount at the laser-irradiated area was 0.0 mm. The offset amount at the laser-irradiated area refers to the distance from the edge of the closing portion that faces the boundary between the edge (edge portion) of the opening of the case body and the closing portion, to the center of the laser-irradiated area.

Next, after removing the adhesive sheet from the interior of the case body, the entire adhesive surface of the adhesive sheet was observed using a microscope, and the size and number of welding spatters adhering to the adhesive surface were measured. In Example 1, the number of welding spatters with a maximum length of 60 µm or more was three. The result is shown in Table 1.

### <Examples 2 to 6>

The procedure from the preparation of the case body and closing plate to the measurement of welding spatters was performed in the same way as in Example 1 described above, except that the area located on the closing portion side relative to the boundary was irradiated with the laser light while a predetermined offset amount (shown in Table 1) from the boundary between the edge (edge portion) of the opening of the case body and the closing portion of the closing plate was maintained, so that the laser-irradiated area was scanned therewith along the boundary by 20 mm. The measurement result is shown in Table 1.

### <Examples 7 to 12>

The procedure from the preparation of the case body and closing plate to the measurement of welding spatters as described above was performed in the same way as in Example 1 described above, except that the laser irradiation conditions in the laser welding were changed as shown in Table 1. The measurement result is shown in Table 1.

### <Evaluation>

As indicated in Table 1, in Examples 1 and 7 (where the boundary between the edge of the opening of the case body and the closing portion of the closing plate was irradiated with the laser light), a relatively large number of welding spatters generated during the laser welding were confirmed, regardless of the size of the laser light used therefor. In contrast, in Examples 2 to 6 and 8 to 12 (where the area located on the closing portion side relative to the boundary between the edge of the opening of the case body and the closing portion of the closing plate was irradiated with the laser light), the generation of welding spatters during the laser welding was significantly suppressed. In Examples 2 to 6 (where a ring-mode laser including a central portion with a relatively small diameter was used), it was confirmed that the generation of welding spatters during the laser welding was able to be sufficiently suppressed by setting the offset amount to 0.1 mm or more. In Examples 8 to 12 (where a ring-mode laser including a central portion with a relatively large diameter was used), it was confirmed that the generation of welding spatters during the laser welding tended to be further suppressed as the offset amount increased.

**[Table 1]**

| | LASER IRRADIATION CONDITIONS | | | | | | NUMBER OF SPATTERS |
|---|---|---|---|---|---|---|---|
| | CENTRAL PORTION | | RING PORTION | | WELDING SPEED (mm/s) | OFFSET AMOUNT (mm) | |
| | DIAMETER (µm) | OUTPUT (w) | DIAMETER (µm) | OUTPUT (W) | | | |
| EXAMPLE 1 | 72 | 800 | 920 | 5000 | 200 | 0.0 | 3 |
| EXAMPLE 2 | 72 | 800 | 920 | 5000 | 200 | 0.1 | 0 |
| EXAMPLE 3 | 72 | 800 | 920 | 5000 | 200 | 0.2 | 0 |
| EXAMPLE 4 | 72 | 800 | 920 | 5000 | 200 | 0.3 | 0 |
| EXAMPLE 5 | 72 | 800 | 920 | 5000 | 200 | 0.4 | 0 |
| EXAMPLE 6 | 72 | 800 | 920 | 5000 | 200 | 0.5 | 0 |
| EXAMPLE 7 | 100 | 1000 | 680 | 3200 | 200 | 0.0 | 6 |
| EXAMPLE 8 | 100 | 1000 | 680 | 3200 | 200 | 0.1 | 2 |
| EXAMPLE 9 | 100 | 1000 | 680 | 3200 | 200 | 0.2 | 1 |
| EXAMPLE 10 | 100 | 1000 | 680 | 3200 | 200 | 0.3 | 0 |
| EXAMPLE 11 | 100 | 1000 | 680 | 3200 | 200 | 0.4 | 0 |
| EXAMPLE 12 | 100 | 1000 | 680 | 3200 | 200 | 0.5 | 0 |

The technology disclosed herein has been described above from various perspectives. Unless otherwise mentioned, the embodiments and the like described herein do not limit the present disclosure. The technology disclosed herein can be modified in various ways, and each component and each process mentioned herein can be omitted or combined as appropriate, as long as no special problems arise. The present specification also includes the disclosure set forth in each of the following items.
Item 1: A method for manufacturing an electricity storage device, including the steps of:
   preparing a case body having an opening on at least one side thereof;
   preparing a closing plate for closing the opening; and
   laser-welding the case body and the closing plate with the closing plate mounted on the case body so as to close the opening, wherein
   the closing plate prepared in the step of preparing the closing plate includes:
      a closing portion that covers the opening, while overlapping an edge of the opening; and
      an insertion portion inserted into the opening along an inner side of the case body with the closing plate closing the opening, and
   in the step of laser-welding the case body and the closing plate,
      an area located on the closing portion side relative to a boundary between the edge of the opening and the closing portion is irradiated with laser light, thereby welding the edge of the opening and the closing portion at the boundary.
Item 2: The method for manufacturing an electricity storage device according to Item 1, wherein in the step of laser-welding the case body and the closing plate, the irradiation of the laser light is performed at a position spaced toward the closing portion side from the boundary between the edge of the opening and the closing portion by 0.15 mm to 0.55 mm.
Item 3: The method for manufacturing an electricity storage device according to Item 1 or 2, wherein in the step of laser-welding the case body and the closing plate, a ring-mode laser including a central portion and a ring portion is used to perform the irradiation of the laser light.
Item 4: The method for manufacturing an electricity storage device according to Item 3, wherein in the step of laser-welding the case body and the closing plate, the irradiation of the laser light is performed at a position spaced toward the closing portion side from the boundary between the edge of the opening and the closing portion by a distance of 2 times to 8 times a spot diameter of the laser light.
Item 5: The method for manufacturing an electricity storage device according to Item 3 or 4, wherein in the step of laser-welding the case body and the closing plate, the laser light having a spot diameter of 60 µm to 90 µm is used.
Item 6: The method for manufacturing an electricity storage device according to any one of Items 1 to 5, wherein the closing plate prepared in the step of preparing the closing plate is shaped such that, when the closing plate is mounted to the opening, the closing portion protrudes from the case body in a direction orthogonal to a direction in which the opening is open.
Item 7: An electricity storage device including:
   a case body having an opening on at least one side thereof; and
   a closing plate that closes the opening, wherein
   the closing plate includes:
      a closing portion that covers the opening, while overlapping an edge of the opening; and
      an insertion portion inserted into the opening along an inner side of the case body, and
   an edge of the opening and the closing portion are welded at a boundary therebetween, and an area located on the closing portion side relative to the boundary between the edge of the opening and the closing portion has a peak of a penetration depth.

## Claims

1. A method for manufacturing an electricity storage device (100), comprising the steps of:
preparing a case body (10) having an opening (10A) on at least one side thereof;
preparing a closing plate (20) for closing the opening (10A); and
laser-welding the case body (10) and the closing plate (20) with the closing plate (20) mounted on the case body (10) so as to close the opening (10A), wherein
the closing plate (20) prepared in the step of preparing the closing plate (20) comprises:
a closing portion (21) that covers the opening (10A), while overlapping an edge of the opening (10A); and
an insertion portion (22) inserted into the opening (10A) along an inner side (10a) of the case body (10) with the closing plate (20) closing the opening (10A), and
in the step of laser-welding the case body (10) and the closing plate (20),
an area located on the closing portion (21) side relative to a boundary between the edge of the opening (10A) and the closing portion (21) is irradiated with laser light (LS), thereby welding the edge of the opening (10A) and the closing portion (21) at the boundary.

2. The method for manufacturing an electricity storage device (100) according to claim 1, wherein in the step of laser-welding the case body (10) and the closing plate (20), the irradiation of the laser light (LS) is performed at a position spaced toward the closing portion (21) side from the boundary between the edge of the opening (10A) and the closing portion (21) by 0.15 mm to 0.55 mm.

3. The method for manufacturing an electricity storage device (100) according to claim 1 or 2, wherein in the step of laser-welding the case body (10) and the closing plate (20), a ring-mode laser including a central portion and a ring portion is used to perform the irradiation of the laser light (LS).

4. The method for manufacturing an electricity storage device (100) according to any one of claims 1 to 3, wherein in the step of laser-welding the case body (10) and the closing plate (20), the irradiation of the laser light (LS) is performed at a position spaced toward the closing portion (21) side from the boundary between the edge of the opening (10A) and the closing portion (21) by a distance of 2 to 8 times a spot diameter of the laser light (LS).

5. The method for manufacturing an electricity storage device (100) according to any one of claims 1 to 4, wherein in the step of laser-welding the case body (10) and the closing plate (20), the laser light (LS) having a spot diameter of 60 µm to 90 _{[}im is used.

6. The method for manufacturing an electricity storage device (100) according to any one of claims 1 to 5, wherein the closing plate (20) prepared in the step of preparing the closing plate (20) is shaped such that, when the closing plate (20) is mounted to the opening (10A), the closing portion (21) protrudes from the case body (10) in a direction orthogonal to a direction in which the opening (10A) is open.

7. An electricity storage device (100) comprising:
a case body (10) having an opening (10A) on at least one side thereof; and
a closing plate (20) that closes the opening (10A), wherein
the closing plate (20) comprises:
a closing portion (21) that covers the opening (10A), while overlapping an edge of the opening (10A); and
an insertion portion (22) inserted into the opening (10A) along an inner side (10a) of the case body (10), and
an edge of the opening (10A) and the closing portion (21) are welded at a boundary therebetween, and an area located on the closing portion (21) side relative to the boundary between the edge of the opening (10A) and the closing portion (21) has a peak of a penetration depth.
